# EUROPÄISCHE PATENTSCHRIFT

(11) **EP 3 828 060 B1**
(45) Veröffentlichungstag und Bekanntmachung des Hinweises auf die Patenterteilung: **17.08.2022**
(21) Anmeldenummer: 20206726.0
(22) Anmeldetag: 10.11.2020
(51) Int. Cl.: B62D 55/253, B62D 55/26

(54) **RAUPENSTEG FÜR EINE LAUFKETTE EINES RAUPENFAHRZEUGS**
TREAD FOR A CRAWLER TRACK OF A TRACKED VEHICLE
CRAMPON POUR UN CHEMIN DE ROULEMENT D'UN VÉHICULE À CHENILLES

(30) Priorität: 29.11.2019 DE 102019132444
(43) Veröffentlichungstag der Anmeldung: 02.06.2021
(73) Patentinhaber: Hans Hall GmbH, 88250 Weingarten (DE)
(72) Erfinder: Hall, Hans, 88250 Weingarten (DE)
(74) Vertreter: Otten, Roth, Dobler & Partner mbB Patentanwälte

(56) Entgegenhaltungen:
- DE-A1- 19 755 581
- DE-U1- 9 006 183
- DE-U1-202018 103 267

## Beschreibung

### Stand der Technik

Raupenstege für eine Laufkette eines Raupenfahrzeugs sind in unterschiedlichen Ausführungsformen bereits bekannt geworden. So sind Raupenstege bekannt, die vollständig aus Stahl oder Aluminium bestehen. Weiter sind Raupenstege bekannt, die einen Grundkörper aufweisen und an dem eine Schneide durch Verschrauben befestigt ist.

Ein Raupensteg aus Stahl hat den Nachteil, dass er zu schwer ist. Eine Raupensteg aus Aluminium hingegen nutzt sich beim Einsatz unter herkömmlichen Betriebsbedingungen sehr stark ab, was bis zum Bruch des Steges führen kann. Ein Raupensteg, welcher aus zwei verschiedenen Komponenten hergestellt ist, ist wiederum vergleichsweise aufwendig und damit kostenintensiv herzustellen. Dokument DE19755581 A1 zeigt die Merkmale des Oberbegriffs des Anspruchs 1.

### Aufgabe und Vorteile der Erfindung

Der Erfindung liegt die Aufgabe zugrunde, unter Vermeidung der Nachteile des Stands der Technik einen verbesserten Raupensteg vorzuschlagen. Insbesondere einen Raupensteg vorzuschlagen, der auf unterschiedliche Einsatzzwecke individuell anpassbar ist und sich mit vergleichsweise geringem Kostenaufwand herstellen lässt.

Diese Aufgabe wird durch die Merkmale des Anspruchs 1 gelöst.

In den Unteransprüchen sind vorteilhafte und zweckmäßige Weiterbildungen des erfindungsgemäßen Raupensteg angegeben.

Die Erfindung geht von einem Raupensteg für eine Laufkette eines Raupenfahrzeugs, insbesondere von einem Raupensteg für eine Laufkette eines Pistenfahrzeugs und/oder von einem Raupensteg für eine Laufkette eines Loipenspurgeräts, aus, wobei der Raupensteg quer zur Laufrichtung an parallel zueinander liegenden in Fahrtrichtung ausgerichteten Bändern der Laufkette befestigbar ist, wobei der Raupensteg einen länglichen Grundkörper umfasst, wobei der Raupensteg ein Auflageelement aufweist, wobei das Auflageelement an einer Außenseite des Grundkörpers als eine flächige Auflage ausgebildet ist, um den Raupensteg mit der Auflage an den Bändern anliegend anzuordnen, wobei der Grundkörper zwei Seitenschenkel aufweist, wobei die beiden Seitenschenkel derart am Grundkörper vorhanden sind, dass der längliche Raupensteg sich an einer der flächigen Auflage gegenüberliegenden und von der Auflage beabstandeten weiteren Außenseite schneidenartig verjüngt, wobei das Auflageelement und die Seitenschenkel einen Hohlraum des Grundkörpers umschließen.

Bevorzugterweise weist der Grundkörper entlang seiner Längserstreckung einen beispielsweise durchgehenden Hohlraum auf. Beispielsweise ist der Grundkörper als ein Hohlprofil ausgebildet. Zum Beispiel ist der Grundkörper einstückig ausgebildet. Vorteilhafterweise ist der Grundkörper als ein Strangpressprofil vorhanden. Denkbar ist auch, dass der Grundkörper als ein abgekantetes, gebogenes und/oder gerolltes Element vorhanden ist. Vorteilhafterweise ist der Hohlraum an Stirnseiten des Grundkörpers offen ausgebildet. Die Stirnseiten des Grundkörpers sind vorteilhafterweise über eine Längserstreckung des Grundkörpers voneinander beabstandet vorhanden.

Der Kern der Erfindung wird darin gesehen, dass ein Seitenschenkel Durchgriffsöffnungen aufweist, sodass eine Schneide des Raupenstegs durch mehrere Durchgriffsöffnungen in den Hohlraum des Grundkörpers eingesteckt vorhanden ist, wobei das Auflageelement ein Aufnahmeorgan aufweist, wobei die Schneide mit dem in den Hohlraum eingesteckten Ende anstehend am Aufnahmeorgan vorhanden ist.

Bevorzugterweise umfasst der Grundkörper insbesondere genau zwei Seitenschenkel. Vorteilhafterweise weist jeder Seitenschenkel des Grundkörpers mehrere Durchgriffsöffnungen auf. Zum Beispiel sind die zwei oder mehr Durchgriffsöffnungen des Seitenschenkels in Längserstreckung des Raupenstegs oder entlang der Längserstreckung des Raupenstegs, insbesondere in Längserstreckung des Grundkörpers gesehen, voneinander beabstandet am Seitenschenkel vorhanden. Beispielswiese sind jeweils zwei Durchgriffsöffnungen durch den Seitenschenkel, insbesondere durch ein Material des Seitenschenkels voneinander beabstandet, insbesondere getrennt, vorhanden. Vorteilhafterweis sind alle Durchgriffsöffnungen am Seitenschenkel voneinander beabstandet vorhanden, beispielsweise durch ein Material des Seitenschenkels. Vorteilhafterweise durchgreift eine Schneide mindestens drei Durchgriffsöffnungen eines Seitenschenkels im angeordneten Zustand am Raupensteg. Hierdurch ist eine Stabilität des Raupenstegs vergleichsweise erhöht.

Bevorzugterweise umfasst der Raupensteg zwei, drei, vier, fünf oder mehr Schneiden. Vorteilhafterweise umfasst der Raupensteg drei Schneiden, insbesondere genau drei Schneiden, oder insbesondere genau vier Schneiden oder insbesondere genau fünf Schneiden. Beispielsweise sind die zwei oder mehr Schneiden in Längserstreckung des Raupenstegs, insbesondere in Längserstreckung des Grundkörpers, gesehen voneinander beabstandet vorhanden. Vorteilhafterweise überlappen sich die Schneiden in einer Richtung quer zur Längserstreckung des Grundkörpers nicht. Vorteilhafterweise ist zumindest eine Schneide an einem Seitenschenkel und zumindest eine weitere Schneide an einem weiteren Seitenschenkel des Grundkörpers angeordnet. Bevorzugterweise ist jede Schneide einstückig ausgebildet. Auch ist es denkbar, dass zumindest zwei der mehreren Schneiden verschieden ausgebildet sind. Vorstellbar ist auch, dass alle Schneiden gleich, z.B. identisch, ausgebildet sind. Vorteilhafterweise ist im angeordneten Zustand am Grundkörper jede Schneide durch Durchgriffsöffnungen in den Hohlraum des Grundkörpers eingesteckt oder durchgesteckt vorhanden. Beispielsweise durchgreift jede Schneide zumindest zwei Durchgriffsöffnungen im angeordneten Zustand am Grundkörper.

Vorteilhafterweise erhält man durch die Anordnung der mehreren Schneiden, z.B. sowohl an dem einem als auch dem weiteren Seitenschenkel, einen Raupensteg, welcher auf einer Standfläche, z.B. einer Fahrfläche des Raupenfahrzeugs, steht, das heißt nicht umkippt, da sich der Raupensteg an zum Beispiel zwei versetzt vorhandenen Schneiden auf dem Untergrund abstützen kann. Das hat den Vorteil, dass eine Laufkette, z.B. ein Raupenband oder eine Raupenkette, an denen der Raupensteg montiert ist, im Stand durch kein oder ein vergleichsweise geringes Kippmoment belastet wird. Beispielsweise werden durch den Raupensteg lediglich senkrechte Kräfte auf die Laufkette übertragen, weil der Raupensteg nicht verkippbar ausgebildet ist.

Vorteilhafterweise ist die Schneide als ein Biegeteil ausgebildet. Bevorzugterweise umfasst die Schneide an einem ersten Ende ein Einsteckelement, welches im angeordneten Zustand am Grundkörper durch die Durchgriffsöffnung im Hohlraum des Grundkörpers eingesteckt vorhanden ist. Beispielsweise umfasst die Schneide ein Mittenelement, welches an das Einsteckelement über eine Umbiegung anschließend vorhanden ist. Beispielsweise umfasst die Schneide außerdem ein Eingreifelement, welches an einem dem ersten Ende gegenüberliegenden zweiten Ende vorhanden ist und welches an das Mittenelement über eine Umbiegung anschließend vorhanden ist. Beispielsweise ist die Schneide mittels des Eingreifelements im angeordneten Zustand am Raupensteg und am Raupenfahrzeug in Kontakt mit einem Fahrzeuguntergrund des Raupenfahrzeugs bringbar. Vorteilhafterweise umfasst das Einsteckelement zumindest eine Ausnehmung, z.B. zwei Ausnehmungen. Denkbar ist auch, dass das Einsteckelement aus mehreren Einsteckteilen besteht, welche beabstandet zueinander vorhanden sind und jeweils über eine Umbiegung mit dem Mittenelement verbunden sind. Hierdurch ist die Schneide an den mehreren Durchgriffsöffnungen anordenbar, insbesondere einsteckbar ausgebildet.

Bevorzugterweise sind die beiden Seitenschenkel an Enden der Seitenschenkel insbesondere unmittelbar miteinander verbunden. Vorteilhafterweise sind die Seitenschenkel im Bereich der schneidenartigen Verjüngung unmittelbar miteinander verbunden. Beispielsweise sind die Seitenschenkel im Bereich der schneidenartigen Verjüngung unlösbar miteinander verbunden, z.B. einstückig vorhanden. Beispielsweise sind das Auflageelement und die beiden Seitenschenkel einstückig vorhanden. Vorteilhafterweise ist ein Seitenschenkel mit dem Auflageelement unlösbar verbunden, z.B. einstückig vorhanden.

Auch wird vorgeschlagen, dass ein Seitenschenkel Durchgriffsöffnungen im Bereich zwischen dem Auflageelement und seinem Ende im Bereich der weiteren Außenseite aufweist.

Vorteilhafterweise sind die Durchgrifföffnungen am Seitenschenkel in einem Bereich zwischen Auflageelement und schneidenartiger Verjüngung vorhanden.

Bevorzugterweise sind die Durchgriffsöffnungen in einer Richtung quer zur Längserstreckung des Grundkörpers gegenüberliegend und beabstandet zum Aufnahmeorgan angeordnet. Vorteilhafterweise stehen eine Innenseite einer Durchgriffsöffnung und eine Innenseite eines Seitenschenkels in einer Flucht, wobei die Innenseite den Hohlraum des Grundkörpers begrenzt. Vorteilhafterweise ist die Schneide mit einem Bereich des Einsteckelements anliegend an der Innenseite des Seitenschenkels vorhanden. Vorteilhafterweise berührt die Schneide die Innenseite des Seitenschenkels, insbesondere flächig.

Ebenfalls erweist es sich von Vorteil, dass die Schneide an einer dem Hohlraum gegenüberliegenden Außenseite eines Seitenschenkels anliegend vorhanden ist. Vorteilhafterweise ist die Schneide mit einem Bereich des Mittenelements der Schneide anliegend an der Außenseite des Seitenschenkels vorhanden. Vorteilhafterweise ist die Schneide flächig anliegend an der Außenseite des Seitenschenkels anliegend vorhanden. Hierdurch ist die Schneide vorteilhafterweise abgestützt vorhanden, wodurch beispielsweise eine Stabilität der Schneide erhöht ist bzw. eine Stabilität der Schneide selbst, z.B. eine Materialdicke und damit Gewicht der Schneide reduzierbar ist.

Weiter wird vorgeschlagen, dass die Schneide durch Durchgriffsöffnungen eines Seitenschenkels durchgesteckt vorhanden ist und die Schneide mit diesem Seitenschenkel vernietet ist. Hierdurch ist die Schneide vorteilhafterweise auswechselbar am Raupensteg vorhanden. Vorstellbar ist, dass die Schneide im Bereich des Einsteckelements und/oder des Mittenelements mit dem Seitenschenkel vernietet ist. Vorteilhafterweise ist die Schneide ausschließlich mit dem Seitenschenkel vernietet vorhanden, durch dessen Durchgriffsöffnung die Schneide eingesteckt vorhanden ist.

Ebenfalls erweist es sich von Vorteil, dass die Schneide mittels einer Niete mit dem Seitenschenkel verbunden ist. Bevorzugterweise ist die Schneide mittels einer Niete unmittelbar mit dem Seitenschenkel verbunden. Vorteilhafterweise ist die Niete als eine Vollniete, als eine Halbhohlniete und/oder als eine Blindniete, insbesondere als eine Zugdornniet ausgebildet. Beispielsweise ist eine Schneide mit mindestens drei Nieten, insbesondere fünf oder mehr Nieten mit dem Seitenschenkel verbunden. Bevorzugterweise ist die Schneide ausschließlich mittels Nieten mit dem Grundkörper, insbesondere dem Seitenschenkel, verbunden.

Von Vorteil erweist sich außerdem, dass das Aufnahmeorgan als eine Führung ausgebildet ist, wobei das in den Hohlraum eingesteckte Ende der Schneide an mindestens zwei Seiten, beispielsweise an mindestens drei Seiten oder z.B. an mindestens fünf Seiten mittels des Aufnahmeorgans geführt vorhanden ist. Bevorzugterweise ist die Schneide an der Führung des Aufnahmeorgans in eine Richtung quer zur Laufrichtung der Laufkette, bspw. in Richtung einer Oberflächennormalen des Fahrzeuguntergrunds abgestützt vorhanden. Vorteilhafterweise ist die Führung derart ausgebildet, dass die Schneide an der Führung in Richtung Laufrichtung der Laufkette und/oder einer Richtung quer zu der Längserstreckung des Raupenstegs abgestützt gelagert ist. Vorteilhafterweise umfasst Auflageelement z.B. genau zwei Aufnahmeorgane. Beispielsweise ist jedes Aufnahmeorgan als eine Führung ausgebildet. Vorteilhafterweise sind die Aufnahmeorgane beabstandet vorhanden. Z.B. sind die Aufnahmeorgane in einer Richtung quer zur Längserstreckung des Raupenstegs beabstandet vorhanden. Durch die vorteilhafte Ausgestaltung des Grundkörpers mit zwei voneinander beabstandeten Aufnahmeorgan ist eine vergleichsweise einfache gegensätzliche Anordnung von zwei Schneiden am Grundkörper realisierbar.

Von Vorteil erweist sich auch, dass die Schneide durch Durchgriffsöffnungen eines Seitenschenkels durchgesteckt vorhanden ist und das in den Hohlraum eingesteckte Ende der Schneide innerhalb des Hohlraums anliegend an diesem Seitenschenkel vorhanden ist. Vorteilhafterweise ist die Schneide durch Durchgriffsöffnungen eines Seitenschenkels durchgesteckt vorhanden und das in den Hohlraum eingesteckte Ende der Schneide innerhalb des Hohlraums direkt anliegend an diesem Seitenschenkel vorhanden. Bevorzugterweise ist die Schneide mit dem Einsteckelement anliegend am Seitenschenkel vorhanden.

In einer vorteilhaften Modifikation des Raupenstegs sind der Grundkörper und die Schneide aus zwei voneinander unterschiedlichen Materialien ausgebildet. Hierdurch ist der Raupensteg vergleichsweise leicht ausgebildet, z.B. das Gewicht des Raupenstegs vorteilhaft reduziert. Vorteilhafterweise ist der Grundkörper aus Aluminium hergestellt. Beispielsweise ist der Grundkörper ausschließlich aus Aluminium hergestellt. Bevorzugterweise ist die Schneide aus Stahl, insbesondere aus Edelstahl ausgebildet. Zum Beispiel ist der Grundkörper als ein Stranggusselement ausgebildet. Vorteilhafterweise ist die Schneide als ein Biegeteil vorhanden.

In einer vorteilhaften Variante des Raupenstegs umschließen das Auflageelement und die Seitenschenkel den Hohlraum entlang eines Umfangs des Hohlraums vollständig. Hierdurch ist eine Stabilität des Raupenstegs vergleichsweise erhöht.

Eine vorteilhafte Ausführungsform der Erfindung ist eine Laufkette eines Raupenfahrzeugs mit einem Band und einem Raupensteg nach einem der vorangegangenen genannten Ausführungsvarianten.

Eine weitere vorteilhafte Ausführungsform der Erfindung ist ein Raupenfahrzeug mit einer Laufkette wie vorangegangen genannt oder mit einem Raupensteg nach einem der vorangegangenen genannten Ausführungsvarianten.

### Figurenbeschreibung

Ein Ausführungsbeispiel wird anhand der nachstehenden schematischen Zeichnungen unter Angabe weiterer Einzelheiten und Vorteile näher erläutert.

Es zeigen:
- Figur 1: eine Seitenansicht eines erfindungsgemäßen Raupenstegs,
- Figur 2: eine Schnittansicht des Raupensteg gemäß Figur 1 in einem Schnitt quer zur Längserstreckung des Raupensteg,
- Figur 3: eine Seitenansicht einer Schneide,
- Figur 4: eine Frontansicht der Schneide gemäß Figur 3,
- Figur 5: eine perspektivische Ansicht von schräg seitlich oben auf einen Grundkörper eines Raupenstegs,
- Figur 6: eine Detailansicht in einer weiteren perspektivischen Ansicht des Grundkörpers gemäß Figur 5,
- Figur 7: eine seitliche Teilansicht auf einen Raupensteg, welcher an einer Laufkette montiert ist und
- Figur 8: eine Draufsicht auf an einer Laufkette montierten Raupenstegen.

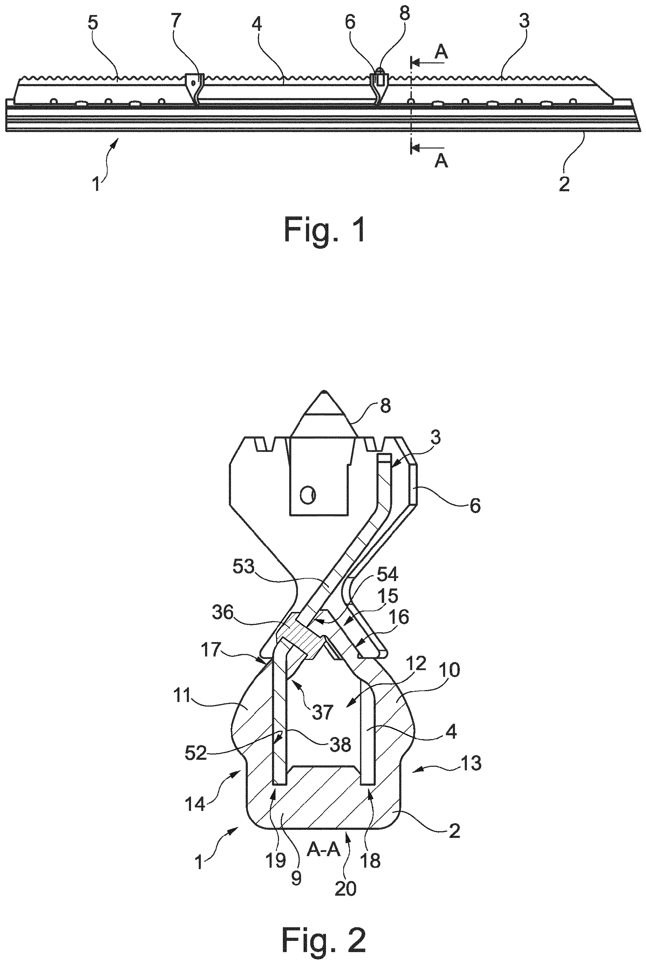

In Figur 1 ein erfindungsgemäße Raupensteg 1 gezeigt. Der Raupensteg 1 umfasst einen Grundkörper 2 und Schneiden 3 bis 5. Jeweils zwei Schneiden 3, 4 oder 4, 5 sind über ein Eisgreifelement 6 bzw. 7 verbunden. Am Eisgreifelement 6 ist beispielhaft ein Eisdorn 8 befestigt, welcher insbesondere für einen eisigen Untergrund variabel an den Raupensteg 1 anordenbar ist.

In Figur 2 ist der Schnitt A-A durch den Raupensteg 1 gemäß Figur 1 dargestellt. Der Grundkörper 2 umfasst ein Auflageelement 9, einen ersten Seitenschenkel 10 und einen zweiten Seitenschenkel 11. Das Auflageelement 9 und die beiden Seitenschenkels 10, 11 umschließen einen Hohlraum 12. Der Hohlraum 12 erstreckt sich vorteilhafterweise entlang der vollständigen Längserstreckung des Grundkörpers 2. Der erste Seitenschenkel 10 ist mit einem ersten Ende 13 mit dem Auflageelement 9 verbunden. Der zweite Seitenschenkel 11 ist mit einem ersten Ende 14 mit dem Auflageelement 9 verbunden. Die beiden Seitenschenkel 10, 11 erstrecken sich ausgehend von ihren ersten Enden 13, 14 vom Auflageelement 9 weg in Richtung einer schneidenartigen Verjüngung 15, an welcher die beiden Seitenschenkel 10, 11 mit ihren zweiten Enden 16, 17 insbesondere formschlüssig miteinander verbunden sind.

Das Auflageelement 9 umfasst ein erstes Aufnahmeorgan 18 und ein zweites Aufnahmeorgan 19. Weiter umfasst das Auflageelement 9 eine flächige Auflage 20. Vorteilhafterweise ist der Raupensteg 1 dazu ausgebildet mit der Auflage 20 an einem Raupenband 21 einer Laufkette 22 angeordnet zu werden.

In den Hohlraum 12 des Grundkörpers 2 ist die Schneide 3 über eine Durchführung 37 des zweiten Seitenschenkels 11 mit dem Einsteckelement 38 der Schneide 3 eingesetzt. Die Schneide 3 ist beispielsweise mittels einer Niete 36 mit dem zweiten Seitenschenkel 11 des Grundkörpers 2 verbunden. Das Einsteckelement 38 der Schneide 3 ist im Aufnahmeorgan 19 geführt angeordnet. Hierzu ist das Aufnahmeorgan 19 vorteilhafterweise als eine Führung ausgebildet, zum Beispiel schienenartig, insbesondere als ein Schlitz.

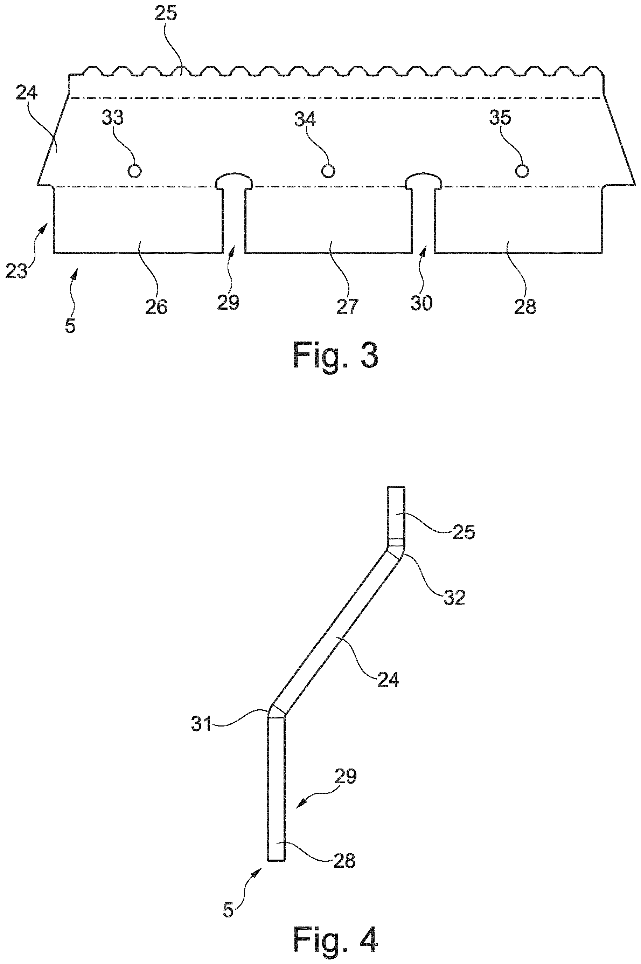

In den Figuren 3 und 4 ist die Schneide 5 dargestellt. Die Schneide 5 besteht aus einem Einsteckelement 23, eine Mittenelement 24 und einem Eingreifelement 25. Das Einsteckelement 23 umfasst Einsteckteile 26 bis 28. Die Einsteckteile 26, 27 und 27, 28 sind jeweils über eine Aussparung 29 bzw. 30 getrennt voneinander vorhanden. Das Einsteckelement 23 ist, insbesondere die Einsteckteile 26 bis 28 sind, über eine Umbiegung 31 mit dem Mittenelement 24 verbunden. Das Eingreifelement 25 ist über eine weitere Umbiegung 32 mit dem Mittenelement 24 verbunden. Am Mittenelement 24 sind Öffnungen 33 bis 35 vorhanden, um die Schneide 5 mittels einer Niet mit dem Grundkörper, insbesondere mit dem zweiten Seitenschenkel 11 zu verbinden.

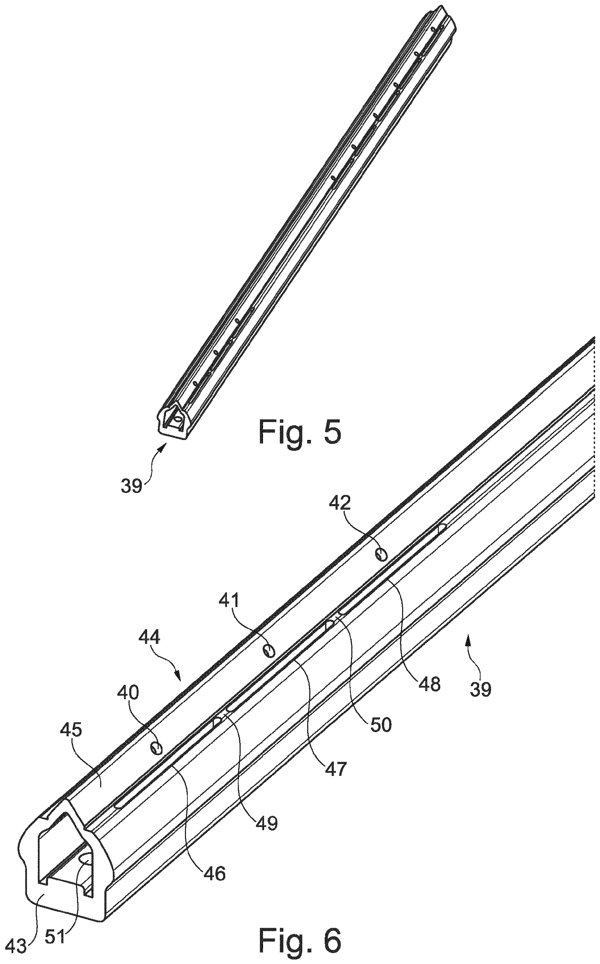

In Figur 5 ist eine weitere Variante eines Grundkörpers 39 dargestellt. In Figur 6 ist eine weitere Perspektive des Grundkörpers 39 ausschnittsweise dargestellt. In Figur 6 gezeigt sind Bohrungen 40 bis 42, um eine Schneide (nicht gezeigt) mittels einer Niet zu befestigen. Die Bohrungen 40 bis 42 befinden sich vorteilhafterweise im Bereich eines dem Auflageelement 43 des Grundkörpers 39 abgewandten Ende 44 eines Seitenschenkels 45. Denkbar ist jedoch auch, dass die Bohrungen 40 bis 42 oder zusätzliche Bohrungen (nicht gezeigt) in einem Bereich in der Nähe des Auflageelements 43 des Seitenschenkels 45 vorhanden sind. Weiter ist in Figur 6 gezeigt, dass der Grundkörper 39 Durchgriffsöffnungen 46 bis 48 aufweist, um eine Schneide am Grundkörper 39 anzuordnen. Die Durchgriffsöffnungen 46, 47 bzw. 47, 48 sind durch einen Steg 49 bzw. 50 des Grundkörpers 39 voneinander beabstandet vorhanden. In den Figuren 5 und 6 auch zeigt ist eine Bohrung 51 am Auflageelement 43, mittels welcher der Grundkörper 39 an einem Raupenband befestigbar, zum Beispiel anschraubbar ist.

In Figur 2 gezeigt ist, dass die Schneide 3 mit dem Einsteckelement 38 vorteilhafterweise an einer Innenseite 52 des zweiten Seitenschenkels 11 anliegend vorhanden ist. Vorteilhafterweise begrenzt die Innenseite 52 des zweiten Seitenschenkels 11 den Hohlraum 12. Bevorzugterweise liegt die Schneide 3 im Bereich ihres Mittenelements 53 mit dem Mittenelement 53 an einer Außenseite 54 des zweiten Seitenschenkels 11 an. Vorteilhafterweise ist die Außenseite 54 des zweiten Seitenschenkels 11 über eine Materialdicke zweiten Seitenschenkels 11 beabstandet zur Innenseite 52 vorhanden.

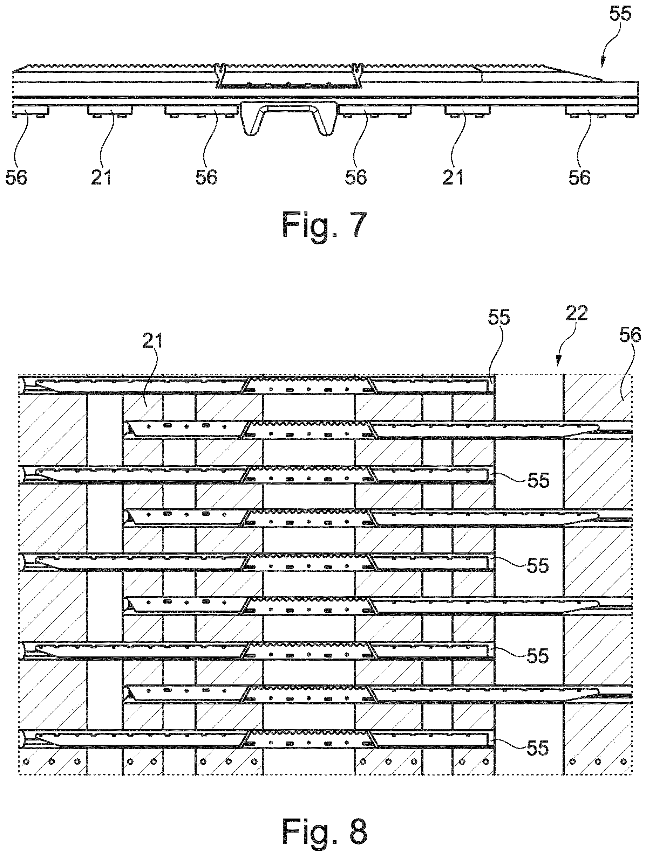

In Figur 7 ist in einer Seitenansicht ein Raupensteg 55 zeigt, welche an Raupenbändern 21, 56 der Laufkette 22 befestigt ist. Figur 8 zeigt ausschnittsweise die Laufkette 22 in einer Draufsicht. In Figur 8 gezeigt sind mehrere an der Laufkette 22 befestigte Raupenstege 55.

**Bezugszeichenliste**

| | | | |
|---|---|---|---|
| 1 | Raupensteg | 29 | Aussparung |
| 2 | Grundkörper | 30 | Aussparung |
| 3 | Schneide | 31 | Umbiegung |
| 4 | Schneide | 32 | Umbiegung |
| 5 | Schneide | 33 | Öffnung |
| 6 | Eisgreifelement | 34 | Öffnung |
| 7 | Eisgreifelement | 35 | Öffnung |
| 8 | Eisdorn | 36 | Niet |
| 9 | Auflageelement | 37 | Durchführung |
| 10 | Seitenschenkel | 38 | Einsteckelement |
| 11 | Seitenschenkel | 39 | Grundkörper |
| 12 | Hohlraum | 40 | Bohrung |
| 13 | Ende | 41 | Bohrung |
| 14 | Ende | 42 | Bohrung |
| 15 | Verjüngung | 43 | Auflageelement |
| 16 | Ende | 44 | Ende |
| 17 | Ende | 45 | Seitenschenkel |
| 18 | Aufnahmeorgan | 46 | Durchgriffsöffnung |
| 19 | Aufnahmeorgan | 47 | Durchgriffsöffnung |
| 20 | Auflage | 48 | Durchgriffsöffnung |
| 21 | Raupenband | 49 | Steg |
| 22 | Laufkette | 50 | Steg |
| 23 | Einsteckelement | 51 | Bohrung |
| 24 | Mittenelement | 52 | Innenseite |
| 25 | Eingreifelement | 53 | Mittenelement |
| 26 | Einsteckteil | 54 | Außenseite |
| 27 | Einsteckteil | 55 | Raupensteg |
| 28 | Einsteckteil | 56 | Raupenband |

## Patentansprüche

1. Raupensteg (1) für eine Laufkette (22) eines Raupenfahrzeugs, insbesondere Raupensteg für eine Laufkette eines Pistenfahrzeugs oder Raupensteg für eine Laufkette eines Loipenspurgeräts, wobei der Raupensteg (1) quer zur Laufrichtung an parallel zueinander liegenden in Fahrtrichtung ausgerichteten Bändern (21) der Laufkette (22) befestigbar ist, wobei der Raupensteg (1) einen länglichen Grundkörper (2) umfasst, wobei der Raupensteg (1) ein Auflageelement (9) aufweist, wobei das Auflageelement (9) an einer Außenseite des Grundkörpers (2) als eine flächige Auflage (20) ausgebildet ist, um den Raupensteg (1) mit der Auflage (20) an den Bändern (21) anliegend anzuordnen, wobei der Grundkörper (2) zwei Seitenschenkel (10, 11) aufweist, wobei die beiden Seitenschenkel (10, 11) derart am Grundkörper (2) vorhanden sind, dass der längliche Raupensteg (1) sich an einer der flächigen Auflage (20) gegenüberliegenden und von der Auflage (20) beabstandeten weiteren Außenseite schneidenartig verjüngt, wobei das Auflageelement (9) und die Seitenschenkel (10, 11) einen Hohlraum (12) des Grundkörpers (2) umschließen,
**dadurch gekennzeichnet, dass**
ein Seitenschenkel (10, 11, 45) Durchgriffsöffnungen (46 - 48) aufweist, sodass eine Schneide (3) des Raupenstegs (1) durch mehrere Durchgriffsöffnungen (46 - 48) in den Hohlraum (12) des Grundkörpers (2, 39) eingesteckt vorhanden ist, wobei das Auflageelement (9) ein Aufnahmeorgan (18, 19) aufweist, wobei die Schneide (3) mit dem in den Hohlraum (12) eingesteckten Ende anstehend am Aufnahmeorgan (18, 19) vorhanden ist.

2. Raupensteg (1) für eine Laufkette (22) eines Raupenfahrzeugs nach dem vorangegangenen Anspruch 1, **dadurch gekennzeichnet, dass** ein Seitenschenkel (10, 11) Durchgriffsöffnungen (46 - 48) im Bereich zwischen dem Auflageelement (9) und seinem Ende (16, 17) im Bereich der weiteren Außenseite aufweist.

3. Raupensteg (1) für eine Laufkette (22) eines Raupenfahrzeugs nach einem der vorangegangenen Ansprüche, **dadurch gekennzeichnet, dass** die Schneide (3) an einer dem Hohlraum (12) gegenüberliegenden Außenseite eines Seitenschenkels (10, 11) anliegend vorhanden ist.

4. Raupensteg (1) für eine Laufkette (22) eines Raupenfahrzeugs nach einem der vorangegangenen Ansprüche, **dadurch gekennzeichnet, dass** die Schneide (3) durch Durchgriffsöffnungen (46 - 48) eines Seitenschenkels (10, 11) durchgesteckt vorhanden ist und die Schneide (3) mit diesem Seitenschenkel (10, 11) vernietet ist.

5. Raupensteg (1) für eine Laufkette (22) eines Raupenfahrzeugs nach einem der vorangegangenen Ansprüche, **dadurch gekennzeichnet, dass** die Schneide (3) mittels einer Niete (36) mit dem Seitenschenkel (10, 11) verbunden ist.

6. Raupensteg (1) für eine Laufkette (22) eines Raupenfahrzeugs nach einem der vorangegangenen Ansprüche, **dadurch gekennzeichnet, dass** das Aufnahmeorgan (18, 19) als eine Führung ausgebildet ist, wobei das in den Hohlraum (12) eingesteckte Ende der Schneide (3) an mindestens zwei Seiten mittels des Aufnahmeorgans (18, 19) geführt vorhanden ist.

7. Raupensteg (1) für eine Laufkette (22) eines Raupenfahrzeugs nach einem der vorangegangenen Ansprüche, **dadurch gekennzeichnet, dass** die Schneide (3) durch Durchgriffsöffnungen (46 - 48) eines Seitenschenkels (10, 11) durchgesteckt vorhanden ist und das in den Hohlraum (12) eingesteckte Ende (23) der Schneide (3) innerhalb des Hohlraums (12) anliegend an diesem Seitenschenkel (10, 11) vorhanden ist.

8. Raupensteg (1) für eine Laufkette (22) eines Raupenfahrzeugs nach einem der vorangegangenen Ansprüche, **dadurch gekennzeichnet, dass** der Grundkörper (2) und die Schneide (3) aus zwei voneinander unterschiedlichen Materialien ausgebildet sind.

9. Raupensteg (1) für eine Laufkette (22) eines Raupenfahrzeugs nach einem der vorangegangenen Ansprüche, **dadurch gekennzeichnet, dass** der das Auflageelement (9) und die Seitenschenkel (10, 11) den Hohlraum (12) entlang eines Umfangs des Hohlraums (12) vollständig umschließen.

10. Laufkette (22) eines Raupenfahrzeugs mit einem Band (21) und einem Raupensteg (1) nach einem der vorangegangenen Ansprüche.

11. Raupenfahrzeug mit einer Laufkette (22) nach dem vorangegangenen Anspruch 10 oder mit einem Raupensteg (1) nach einem der vorangegangenen Ansprüche 1 bis 9.

## Claims

1. Crawler tread (1) for a running track (22) of a crawler vehicle, in particular crawler tread for a running track of a downhill snow groomer or crawler tread for a running track of a cross-country snow groomer, it being possible for the crawler tread (1) to be fastened transversely to the running direction to belts (21) of the running track (22) which are oriented in the direction of travel and lie parallel to one another, the crawler tread (1) comprising an elongate main body (2), the crawler tread (1) having a support element (9), the support element (9) being configured on an outer side of the main body (2) as a flat support (20), in order to arrange the crawler tread (1) so as to bear with the support (20) against the belts (21), the main body (2) having two side limbs (10, 11), the two side limbs (10, 11) being present on the main body (2) in such a way that the elongate crawler tread (1) tapers in an edge-like manner on a further outer side which lies opposite the flat support (20) and is spaced apart from the support (20), the support element (9) and the side limbs (10, 11) enclosing a cavity (12) of the main body (2), **characterized in that** a side limb (10, 11, 45) has through-passage openings (46-48), with the result that an edge (3) of the crawler tread (1) is present in a manner which is plugged through a plurality of through-passage openings (46-48) into the cavity (12) of the main body (2, 39), the support element (9) having a receiving member (18, 19), the edge (3) being present so as to line up on the receiving member (18, 19) with the end which is plugged into the cavity (12).

2. Crawler tread (1) for a running track (22) of a crawler vehicle according to the preceding Claim 1, **characterized in that** a side limb (10, 11) has through-passage openings (46-48) in the region between the support element (9) and its end (16, 17) in the region of the further outer side.

3. Crawler tread (1) for a running track (22) of a crawler vehicle according to either of the preceding claims, **characterized in that** the edge (3) is present so as to bear against an outer side of a side limb (10, 11), which outer side lies opposite the cavity (12).

4. Crawler tread (1) for a running track (22) of a crawler vehicle according to one of the preceding claims, **characterized in that** the edge (3) is present in a manner which is plugged through through-passage openings (46-48) of a side limb (10, 11), and the edge (3) is riveted to this side limb (10, 11).

5. Crawler tread (1) for a running track (22) of a crawler vehicle according to one of the preceding claims, **characterized in that** the edge (3) is connected by means of a rivet (36) to the side limb (10, 11).

6. Crawler tread (1) for a running track (22) of a crawler vehicle according to one of the preceding claims, **characterized in that** the receiving member (18, 19) is configured as a guide, that end of the edge (3) which is plugged into the cavity (12) being present in a manner which is guided on at least two sides by means of the receiving member (18, 19).

7. Crawler tread (1) for a running track (22) of a crawler vehicle according to one of the preceding claims, **characterized in that** the edge (3) is present in a manner which is plugged through through-passage openings (46-48) of a side limb (10, 11), and that end (23) of the edge (3) which is plugged into the cavity (12) is present within the cavity (12) in a manner which bears against this side limb (10, 11).

8. Crawler tread (1) for a running track (22) of a crawler vehicle according to one of the preceding claims, **characterized in that** the main body (2) and the edge (3) are configured from two materials which are different from one another.

9. Crawler tread (1) for a running track (22) of a crawler vehicle according to one of the preceding claims, **characterized in that** the support element (9) and the side limbs (10, 11) enclose the cavity (12) completely along a periphery of the cavity (12).

10. Running track (22) of a crawler vehicle with a belt (21) and a crawler tread (1) according to one of the preceding claims.

11. Crawler vehicle with a running track (22) according to the preceding Claim 10 or with a crawler tread (1) according to one of the preceding Claims 1 to 9.

## Revendications

1. Crampon (1) pour une chenille (22) d'un véhicule à chenilles, notamment crampon pour une chenille d'un véhicule de piste ou crampon pour une chenille d'un appareil de piste de ski de fond, le crampon (1) pouvant être fixé transversalement à la direction de déplacement sur des courroies (21) de la chenille (22) orientées parallèlement les unes aux autres dans la direction de conduite, le crampon (1) comprenant un corps de base allongé (2), le crampon (1) présentant un élément d'appui (9), l'élément d'appui (9) étant réalisé sur un côté extérieur du corps de base (2) sous la forme d'un appui plat (20) afin d'agencer le crampon (1) avec l'appui (20) appliqué contre les courroies (21), le corps de base (2) présentant deux branches latérales (10, 11), les deux branches latérales (10, 11) se présentant sur le corps de base (2) de telle sorte que le crampon allongé (1) se rétrécit à la manière d'un tranchant sur un autre côté extérieur opposé à l'appui plat (20) et espacé de l'appui (20), l'élément d'appui (9) et les branches latérales (10, 11) entourant une cavité (12) du corps de base (2), **caractérisé en ce que**
une branche latérale (10, 11, 45) présente des ouvertures de pénétration (46-48), de telle sorte qu'un tranchant (3) du crampon (1) est inséré dans la cavité (12) du corps de base (2, 39) à travers plusieurs ouvertures de pénétration (46-48), l'élément d'appui (9) présentant un organe de réception (18, 19), le tranchant (3) se présentant avec l'extrémité insérée dans la cavité (12) en contact avec l'organe de réception (18, 19).

2. Crampon (1) pour une chenille (22) d'un véhicule à chenilles selon la revendication 1 précédente, **caractérisé en ce qu'**une branche latérale (10, 11) présente des ouvertures de pénétration (46-48) dans la zone entre l'élément d'appui (9) et son extrémité (16, 17) dans la zone de l'autre côté extérieur.

3. Crampon (1) pour une chenille (22) d'un véhicule à chenilles selon l'une quelconque des revendications précédentes, **caractérisé en ce que** le tranchant (3) est appliqué contre un côté extérieur d'une branche latérale (10, 11) opposé à la cavité (12).

4. Crampon (1) pour une chenille (22) d'un véhicule à chenilles selon l'une quelconque des revendications précédentes, **caractérisé en ce que** le tranchant (3) passe à travers des ouvertures de pénétration (46-48) d'une branche latérale (10, 11) et le tranchant (3) est riveté à cette branche latérale (10, 11).

5. Crampon (1) pour une chenille (22) d'un véhicule à chenilles selon l'une quelconque des revendications précédentes, **caractérisé en ce que** le tranchant (3) est relié à la branche latérale (10, 11) au moyen d'un rivet (36) .

6. Crampon (1) pour une chenille (22) d'un véhicule à chenilles selon l'une quelconque des revendications précédentes, **caractérisé en ce que** l'organe de réception (18, 19) est réalisé sous la forme d'un guide, l'extrémité du tranchant (3) insérée dans la cavité (12) est guidée sur au moins deux côtés au moyen de l'organe de réception (18, 19).

7. Crampon (1) pour une chenille (22) d'un véhicule à chenilles selon l'une quelconque des revendications précédentes, **caractérisé en ce que** le tranchant (3) passe à travers des ouvertures de pénétration (46-48) d'une branche latérale (10, 11) et l'extrémité (23) du tranchant (3) insérée dans la cavité (12) est appliquée contre cette branche latérale (10, 11) à l'intérieur de la cavité (12).

8. Crampon (1) pour une chenille (22) d'un véhicule à chenilles selon l'une quelconque des revendications précédentes, **caractérisé en ce que** le corps de base (2) et le tranchant (3) sont réalisés à partir de deux matériaux différents l'un de l'autre.

9. Crampon (1) pour une chenille (22) d'un véhicule à chenilles selon l'une quelconque des revendications précédentes, **caractérisé en ce que** l'élément d'appui (9) et les branches latérales (10, 11) entourent complètement la cavité (12) le long d'une circonférence de la cavité (12) .

10. Chenille (22) d'un véhicule à chenilles comprenant une courroie (21) et une crampon (1) selon l'une quelconque des revendications précédentes.

11. Véhicule à chenilles comprenant une chenille (22) selon la revendication 10 précédente ou comprenant une crampon (1) selon l'une quelconque des revendications 1 à 9 précédentes.
